Europäisches Patentamt

European Patent Office

Office européen des brevets

(11) Publication number: **0 406 942 A1**

# EUROPEAN PATENT APPLICATION

(21) Application number: 90201698.9

(22) Date of filing: 27.06.90

(51) Int. Cl.5: **H01J 9/22**, H01J 9/227, H01J 29/22, C09K 11/02

(30) Priority: 03.07.89 NL 8901681

(43) Date of publication of application:
09.01.91 Bulletin 91/02

(84) Designated Contracting States:
DE FR GB IT NL

(71) Applicant: N.V. Philips' Gloeilampenfabrieken
Groenewoudseweg 1
NL-5621 BA Eindhoven(NL)

(72) Inventor: Smits, Gerardus Joseph Maria
c/o INT. OCTROOIBUREAU B.V., Prof.
Holstlaan 6
NL-5656 AA Eindhoven(NL)

(74) Representative: Koppen, Jan et al
INTERNATIONAAL OCTROOIBUREAU B.V.
Prof. Holstlaan 6
NL-5656 AA Eindhoven(NL)

(54) Method of manufacturing a display device and a display device.

(57) A method of manufacturing a display device, in which a surface is provided with powder particles. The said surface is provided with carrier powder containing the powder particles. The average grain size of the carrier powder is larger than the average grain size of the powder particles. As a result hereof a fine powder can be applied to the said surface without said powder adhering in undesirable places.

FIG.3

## METHOD OF MANUFACTURING A DISPLAY DEVICE AND A DISPLAY DEVICE.

The invention relates to a method of manufacturing a display device, in which a surface of this display device is provided with powder particles.

The invention also relates to a display device manufactured according to said method.

The method of the type described in the opening paragraph and a display device of the type mentioned in the second paragraph are known from United States Patent Specification 2,032,760.

In said known method a display window of a cathode ray tube is provided with a sticky layer on which a mixture of a phosphor powder and a zinc powder are poured. Subsequently, the cathode ray tube is shaken and as a result hereof a uniform phosphor coating is formed on the sticky layer. The explanation given for this phenomenon is that only fine phosphor powder is held by the sticky layer and larger phosphor particles are knocked off by the relatively heavy zinc particles (said zinc particles have a cross-section of approximately 600 $\mu$m). Subsequently the remaining mixture is removed from the cathode ray tube and the tube is heated after which a uniform phosphor layer is formed. The disadvantage of said method is that during the shaking of the cathode ray tube the fine powder particles adhere at other places in the tube. Said fine powder particles may become detached at a later stage and, for example, cause a short-circuit. It is alternatively possible that said powder particles become luminescent and bring about colour shading.

One of the objects of the invention is to provide a method of alleviating the above-mentioned problem.

For this purpose, the method according to the invention is characterized in that the powder particles are contained in a carrier powder, the average grain size of the powder particles being smaller than the average grain size of the carrier powder which has the property that it starts to flow at an increased temperature, the said surface being provided with the carrier powder which is heated to a temperature such that it starts to flow.

During the flowing of the carrier powder the powder particles are distributed over the surface and form a uniform layer. This has the advantage that there are no fine powder particles flying up and adhering in undesirable places. A further advantage is that this enables a more economical use of the powder particles.

In the scope of the invention, the powder particles may consist of, for example, graphite particles which are used to form a black matrix in a matrix cathode ray tube or phosphor powder to form a display screen.

In an embodiment of the method according to the invention, a carrier powder is used having an average grain size in the range from approximately 1 to approximately 20 $\mu$m. When the carrier-powder particles are smaller than 1 $\mu$m they may adhere in undesirable places and when they are larger that 20 $\mu$m the accuracy with which the powder particles are provided, which also depends on the size of the carrier-powder grains, is limited too much for specific applications in a display device.

Preferably, a carrier powder is used having an average cross-section in the range from 4 to 14 $\mu$m.

The flow temperature of the carrier powder is preferably in the range from approximately 50°C to approximately 250°C. In this case relatively little energy is required to make the carrier powder flow.

In an embodiment of the method according to the invention, the carrier powder is formed by a polymer.

In a further embodiment of the method according to the invention the polymer is a polyacrylate.

In general, a cathode ray tube is subjected to a firing treatment. The temperature during firing is approximately 450°C. It has been found that during such a firing treatment a polyacrylate disappears without residue and, hence, cannot adversely affect the quality of the image displayed.

A further embodiment of the method is characterized in that before the said surface is provided with the carrier powder, a layer whose adhesive power can be influenced by means of exposure is applied to the said surface, said layer then being exposed and the carrier powder being provided on this layer.

Said layer may consist of a material whose adhesive power increases according as the layer is exposed or it may consist of a material whose adhesive power decreases according as the layer is exposed.

Such layers are known per se from, for example, German Patent specification DE-OS 2758209.

The invention will be explained in greater detail by means of a few exemplary embodiments and with reference to the accompanying drawing, in which

Figure 1 is a sectional view of a display device manufactured according to the inventive method:

Figures 2a en 2b are diagrammatic representations of the method and

Figure 3 is a further embodiment of the method.

The Figures are diagrammatic and not drawn to scale, corresponding parts in the various embodiments generally bearing the same reference numerals.

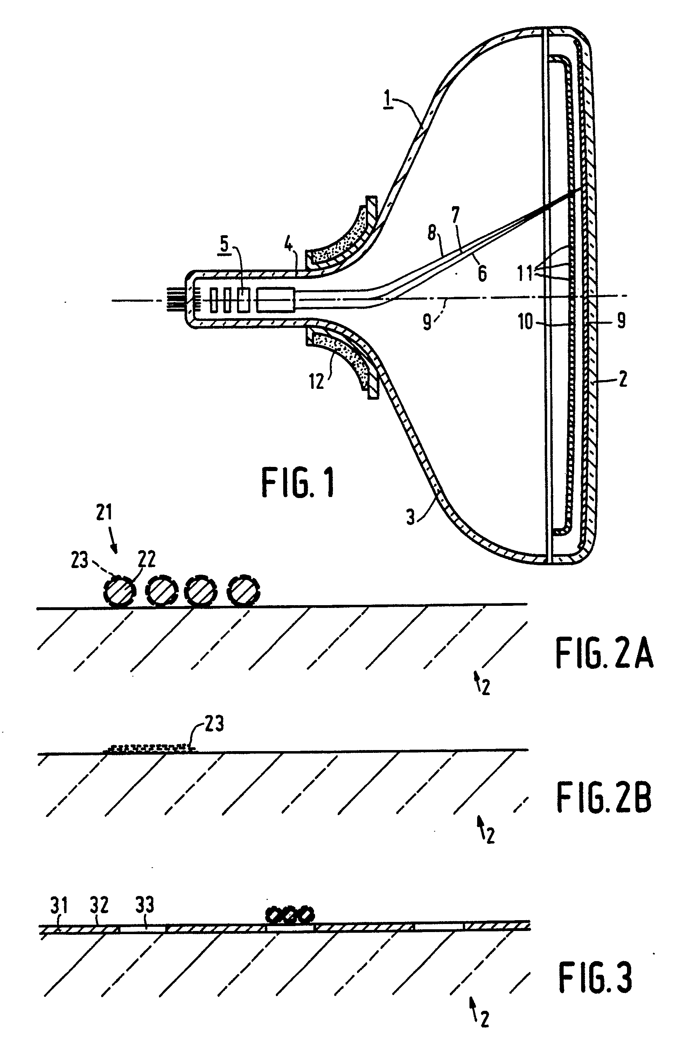

Figure 1 is a sectional view of a display device which, in the present example, comprises a cathode ray tube. In a glass envelope 1 which is composed of a display window 2, a cone 3 and a neck 4, an electron gun 5 which generates three electron beams 6, 7 and 8 is arranged in said neck 4. The display window 2 is provided with a display screen 9 on the inside, which display screen, in this example, contains a large number of triads of phosphor elements. Said elements may consist of, for example, lines or dots. In the present example the display screen contains linear triads. Each triad comprises a line containing a phosphor luminescing in green, a line containing a phosphor luminescing in blue and a line containing a phosphor luminescing in red. Said phosphor lines extend perpendicularly to the plane of the drawing. A shadow mask 10 in which a large number of elongated apertures 11 are formed through which the electron beams 6, 7 and 8 pass is positioned in front of the display screen. When in operation, the electron beams are deflected across the display screen 9 by a deflection coil system 12.

Figures 2a and 2b are diagrammatic illustrations of the method.

A carrier powder 21 is provided on the display window 2. Said powder contains grains 22 of a substance which starts to flow at an increased temperature, said grains being provided with powder particles 23. After the carrier powder 21 is provided on the display window 2, the temperature is increased to above the flow temperature of the material of the carrier powder. As a result hereof, the carrier-powder grains 22 start to melt and a layer of the powder particles 23 is formed as shown in Figure 2b. The layer formed by the material of the carrier powder is not shown in Figure 2b. Said powder particles may be, for example, phosphor particles or graphite particles for providing a matrix in a matrix tube or pigment particles for applying a colour filter layer. The grains 22 preferably contain a substance having a flow temperature in the range between 50°C and 250°C. In this case, relatively little energy is necessary to make the grains 22 flow. The size of the grains 22 ranges from, for example approximately 1 to 20 $\mu$m. Preferably, the average grain size ranges from approximately 4 to 14 $\mu$m. When the grain size is relatively large inhomogeneities may occur in the surface coating for which the powder particles 23 are used. The grains 22 may contain a polymer, for example, a polyacrylate. An example of a suitable polyacrylate is PMMA (polymethylmethacrylate), which is a polymer whose flow temperature can be influenced by the degree of polymerization. Polyacrylates have the advantage that they disappear without residue when the display device is subjected to a firing treatment. The powder particles 23 may be located both on the outside of the grains (as shown in Figure 2a) and inside the grains. Essential to the invention is that the powder particles 23 are located on or in the grains 22. The method is particularly suitable for, inter alia, the application of various colour filter layers to a colour picture screen. By using the method according to the invention it can be precluded that a colour filter layer, which is provided on a display window of a display device, is contaminated by pigment particles of another colour filter layer. A colour filter layer may, for example, be provided between a red phosphor and the display window to absorb non-red components of the light emitted by the phosphor. For the manufacture of a colour filter layer the pigment particles may be contained in grains 22 which contain a type of glass having a low melting point.

Figure 3 shows an embodiment of the method according to the invention. A layer 31 whose adhesive power can be influenced by means of exposure to light, for example, ultraviolet light is provided on the display window 2. Said layer 31 is exposed through a mask. As a result hereof, adhering portions 33 and non-adhering portions 32 are formed in the layer 31. Carrier powder provided with graphite particles which is poured on the layer 31 adheres to the portions 33. Thus, after heating black pigment is provided on the portions 33. The graphite particles form a black matrix in a matrix tube. The graphite particles have a grain size in the range from, for example, 0.1 to 1 $\mu$m.

It will be obvious that within the scope of the invention many variations are possible to those skilled in the art. For example, the method is not limited by the shape of the display device. The display device may be of the type in which an image is displayed by means of liquid crystals, a black matrix being provided between the liquid crystals. Also if the display device contains a cathode ray tube the shape of the cathode ray tube does not limit the method according to the invention. The cathode ray tube may be a flat cathode ray tube or, for example, contain more than one electron gun.

## Claims

1. A method of manufacturing a display device, in which a surface of the display device is provided with powder particles, characterized in that the powder particles are contained in a carrier powder, the average grain size of the powder particles being smaller than the average grain size of the carrier powder which has the property that it starts to flow at an increased temperature, the said surface being provided with the carrier powder which is heated to a temperature such that it starts to flow.

2. A method as claimed in Claim 1, characterized in that a carrier powder is used having an average cross-section of the carrier powder particles in the range from approximately 1 to approximately 20 μm.

3. A method as claimed in Claim 2, characterized in that a carrier powder is used having an average cross-section in the range from approximately 4 to approximately 14 μm.

4. A method as claimed in Claim 1, 2 or 3, characterized in that a carrier powder is used whose flow temperature is in the range from approximately 50°C to approximately 250°C.

5. A method as claimed in Claim 1, 2, or 4, characterized in that the carrier powder is formed by a polymer.

6. A method as claimed in Claim 5, characterized in that the polymer is a polyacrylate.

7. A method as claimed in any one of the preceding Claims, characterized in that before the said surface is provided with the carrier powder, a layer whose adhesive power can be influenced by means of exposure is applied to the said surface, said layer then being exposed and the carrier powder being provided on this layer.

8. A method as claimed in one of the preceding Claims, characterized in that the said surface is a display window of the display device, and in that a matrix pattern is formed by means of the powder particles.

9. A method as claimed in Claim 1, 2, 3, 4, 5, 6 or 7, characterized in that the said surface is a display window of the display device, and in that a phosphor pattern is formed by means of the powder particles.

10. A method as claimed in Claim 1, 2, 3, 4, 5, 6 or 7, characterized in that the said surface is a display window of the display device, and in that a colour filter layer is formed by means of the powder particles.

11. A display device manufactured according to the method described in one of the preceding Claims.

EP 0 406 942 A1

**FIG. 1**

**FIG. 2A**

**FIG. 2B**

**FIG. 3**

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | US-A-4 420 444 (H. YAMADA et al.) <br> * Whole document * <br> --- | 1 | H 01 J 9/22 <br> H 01 J 9/227 <br> H 01 J 29/22 <br> C 09 K 11/02 |
| A | US-A-3 330 981 (M.A. AIA) <br> * Whole document * <br> --- | 1 | |
| A | FR-A-2 343 789 (RCA) <br> * Whole document * <br> ----- | 1 | |

TECHNICAL FIELDS SEARCHED (Int. Cl.5)

H 01 J 9
H 01 J 29
C 09 K 11

The present search report has been drawn up for all claims

| Place of search | Date of completion of the search | Examiner |
|---|---|---|
| THE HAGUE | 26-09-1990 | DROUOT M.C. |